(19) Europäisches Patentamt
European Patent Office
Office européen des brevets

(11) **EP 3 771 182 B1**

(12) **FASCICULE DE BREVET EUROPEEN**

(45) Date de publication et mention
de la délivrance du brevet:
**22.03.2023 Bulletin 2023/12**

(21) Numéro de dépôt: **20186883.3**

(22) Date de dépôt: **21.07.2020**

(51) Classification Internationale des Brevets (IPC):
***H04L 67/12*** *(2022.01)*

(52) Classification Coopérative des Brevets (CPC):
**H04L 67/12**

(54) **PROCÉDÉ POUR DÉTECTER ET IDENTIFIER DES EQUIPEMENTS COMMUNIQUANT SELON UN PROTOCOLE MODBUS ET CONTROLEUR DE COMMUNICATION POUR LA MISE EN OEUVRE D'UN TEL PROCÉDÉ**

VERFAHREN ZUM ENTDECKEN UND IDENTIFIZIEREN VON ÜBER EIN MODBUS-PROTOKOLL KOMMUNIZIERENDEN GERÄTEN, UND KOMMUNIKATIONS-CONTROLLER ZUR UMSETZUNG DIESES VERFAHRENS

METHOD FOR DETECTING AND IDENTIFYING DEVICES COMMUNICATING ACCORDING TO A MODBUS PROTOCOL AND COMMUNICATION CONTROLLER FOR IMPLEMENTING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.07.2019 FR 1908341**

(43) Date de publication de la demande:
**27.01.2021 Bulletin 2021/04**

(73) Titulaire: **Schneider Electric Industries SAS 92500 Rueil Malmaison (FR)**

(72) Inventeurs:
• **IGNATOVA, Vanya 38240 Meyan (FR)**
• **AUBERT, Florent 38240 Meyan (FR)**
• **LAPORTE, Alexandre 38240 Meyan (FR)**

(74) Mandataire: **Schneider Electric Service Propriété Industrielle 160 Avenue des Martyrs 38000 Grenoble (FR)**

(56) Documents cités:
**WO-A1-01/76194**

**Description**

**DOMAINE TECHNIQUE**

La présente invention concerne un procédé pour détecter et identifier des équipements communiquant selon un protocole de communication Modbus, connectés au moyen d'un premier réseau de communication de type Ethernet ou au moyen d'un second réseau de communication, le premier et le second réseau de communication étant reliés par une passerelle de communication. L'invention concerne également un contrôleur de communication mettant en oeuvre un tel procédé.

Sous le terme réseau IP (Internet Protocol), on désignera ci-après un réseau de communication de type Internet (Intranet ou Extranet) conforme à la norme TCP/IP (Transport Communication Protocol / Internet Protocol). Modbus est un protocole de messagerie qui est fréquemment utilisé dans des architectures d'équipements d'automatisme (http://www.modbus.org/). Un réseau IP peut véhiculer des messages conformes au protocole de communication Modbus/TCP. Modbus/TCP est un protocole de communication qui permet d'échanger des trames conformes au protocole Modbus pour la couche application (couche 7) du modèle ISO (International Standards Organization), et de véhiculer ces trames Modbus sur un réseau Ethernet en utilisant les couches ISO du standard TCP/IP de l'Internet. Dans la suite du présent document, le terme "réseau de type Modbus série" définit une liaison série Modbus utilisant un protocole de communication qui permet d'échanger des trames conformes au protocole Modbus et de véhiculer ces trames Modbus sur une liaison série multipoints. Les adresses Modbus sur une telle liaison série sont codées sur un octet (0 à 255).

Par exemple, le document FR 2 930 394 A1 décrit le protocole Modbus et une passerelle de communication entre deux réseaux IP capable de router des messages conformes au protocole de communication Modbus/TCP. Le document D1=WO 01/76194 A1 (BRITISH TELECOMM [GB]; BARRETT MARK ALAN [GB]) 11 octobre 2001 (2001-10-11) vise à résoudre le problème de la seule identification et/ou localisation d'équipements communiquant avec un seul et même protocole de communication.

**ETAT DE LA TECHNIQUE ANTERIEURE**

Les systèmes de contrôle/commande industriels sont constitués d'équipements interconnectés entre eux par un ou plusieurs réseaux de communication afin de mettre à disposition d'un exploitant des données de fonctionnement et permettre des commandes. L'évolution des technologies de communication entre appareils et l'accroissement permanent du nombre d'équipements pouvant être connectés accroit la complexité de tels systèmes. Ces systèmes sont conçus par des experts mais, par exemple, au moment de la mise en oeuvre sur le terrain ou en cours d'exploitation, un technicien en charge de l'intégration des équipements dans l'installation ne dispose pas toujours des outils complets ou de la compétence nécessaire pour valider de manière exhaustive la conformité du système ou identifier l'origine d'un dysfonctionnement. En particulier, la connexion d'appareils à des réseaux de communication est une opération simple en soi mais la vérification que tous les appareils faisant partie du système de contrôle/commande sont effectivement connectés correctement devient rapidement complexe et fastidieuse lorsque le système met en oeuvre un grand nombre d'équipements. L'utilisation d'un dispositif de détection et d'identification automatique de tous les équipements connectés augmente la productivité du technicien en charge de l'intégration des équipements et réduit significativement le temps nécessaire pour déceler une erreur de définition de l'adresse d'un équipement ou encore l'installation d'un type d'équipement en lieu et place d'un autre. Enfin, un tel dispositif de détection et d'identification peut être mis en oeuvre par un personnel ayant une compétence technique moins élevée qu'un expert.

La demande de brevet US 2009/0287803 A1 décrit un système et un procédé permettant de découvrir, de manière automatique, des dispositifs dans des systèmes de surveillance de grande installation. Ce procédé effectue des interrogations selon différents modes, données fragmentaires, blocs de données, adresses de registres, et compare la réponse obtenue à des valeurs de référence. Le mode d'interrogation est changé quand le procédé n'obtient pas une réponse correcte. Un inconvénient de ce procédé est, d'une part, une durée de découverte pouvant être extrêmement longue puisque tous les équipements connectés font l'objet d'une tentative de reconnaissance, et, d'autre part, la durée de découverte ne pouvant pas être évaluée à priori, l'utilisateur ne peut être informé de la durée nécessaire au déroulement complet du procédé.

La demande de brevet WO 2013/062604 A1 décrit un système de découverte, configuration et pilotage d'équipements. Un premier protocole de communication est utilisé pour une phase de découverte des équipements et un second protocole de communication est utilisé pour une phase d'identification des équipements. Un tel procédé ne permet pas de découvrir des équipements connectés sur un second réseau de communication, en aval d'une passerelle de communication.

EP 3 771 182 B1

**EXPOSE DE L'INVENTION**

La présente invention vise donc à remédier à ces inconvénients. Pour cela, la présente invention a pour objet un procédé mis en oeuvre dans un contrôleur de communication connecté, au moyen d'un premier réseau de communication de type Ethernet, à un ou plusieurs premiers équipements communiquant selon un protocole IP, ledit procédé étant décrit dans la revendication 1.

Avantageusement, l'étape de recherche de tous les premiers équipements comporte une étape de recherche des adresses IP des premiers équipements ayant des ports ouverts.

Préférentiellement, l'étape de recherche de tous les premiers équipements comporte une étape d'élaboration d'une première liste constituée des adresses IP de tous les premiers équipements ayant des ports ouverts.

Avantageusement, l'étape de recherche de tous les premiers équipements comporte une étape de détection des premiers équipements ayant une même adresse IP.

Préférentiellement, l'étape de recherche du ou des premiers équipements communiquant selon le protocole de communication Modbus TCP/IP comporte une étape d'émission d'une requête d'identification Modbus sur le port 502 TCP adressée à chaque premier équipement au moyen d'un numéro d'hôte, de 1 à un nombre maximal d'hôtes prédéfini, pour chaque adresse IP contenue dans la première liste.

Avantageusement, l'étape de recherche du ou des premiers équipements communiquant selon le protocole de communication Modbus TCP/IP listés dans la première liste comporte une étape de détection des premiers équipements répondant à la requête d'identification Modbus et ayant une même adresse IP.

Avantageusement, l'étape de recherche du ou des premiers équipements communiquant selon le protocole de communication Modbus TCP/IP comporte une étape d'élaboration d'une deuxième liste constituée des adresses IP du ou des premiers équipements répondant à la requête d'identification d'adresse Modbus.

Préférentiellement, une base de données est constituée dans une étape préliminaire, ladite base de données étant constituée d'un premier champ contenant une donnée d'identification d'au moins un équipement répertorié, et, pour chaque équipement répertorié, au moins un deuxième champ contenant au moins une adresse Modbus d'un registre contenant la donnée d'identification dudit équipement répertorié.

Avantageusement, un troisième champ est associé à chaque équipement répertorié dans la base de données, ledit troisième champ contenant un état caractérisant si l'équipement répertorié est une passerelle de communication ou un équipement terminal.

Avantageusement, le procédé comporte une étape d'identification des premiers et des seconds équipements communiquant selon le protocole de communication Modbus TCP/IP, ladite étape d'identification comportant, pour chaque premier équipement listé dans la deuxième liste :

- une étape d'envoi d'une requête Modbus de lecture du contenu successivement à chacune des adresses contenues dans le deuxième champ de la base de données,
- une étape d'identification du premier équipement à un modèle répertorié quand une donnée lue à l'étape d'envoi de requête Modbus de lecture, correspond à la donnée d'identification d'un modèle répertorié, et
- une étape d'élaboration d'une troisième liste constituée des données d'identification des équipements communiquant selon le protocole de communication Modbus TCP/IP, ladite troisième liste étant associée à l'adresse IP dudit premier équipement.

Préférentiellement, l'étape d'identification des premiers et des seconds équipements communiquant selon le protocole de communication Modbus TCP/IP comporte une boucle d'interrogation dans laquelle, pour chaque premier équipement identifié dans la troisième liste :

- quand ledit premier équipement identifié est une passerelle de communication, alors une étape de recherche et d'identification de tous les seconds équipements connectés au second réseau est effectuée, et
- quand ledit premier équipement identifié n'est pas une passerelle de communication, alors l'étape d'identification des premiers équipements se poursuit par une étape d'interrogation du premier équipement identifié suivant dans la deuxième liste.

Avantageusement, l'étape de recherche et d'identification de tous les seconds équipements connectés au moyen d'une passerelle de communication au second réseau de communication, comporte :

- pour chaque adresse Modbus de 1 jusqu'au nombre maximal d'hôtes, une étape d'envoi d'une requête Modbus de lecture du contenu successivement à chacune des adresses contenues dans le deuxième champ de la base de données,
- une étape d'identification d'un second équipement à un modèle répertorié quand la donnée lue à une des adresses

3

contenue dans le deuxième champ correspond à la donnée d'identification d'un modèle répertorié, et
- une étape de mise à jour de la troisième liste d'équipements élaborée en associant à l'adresse IP de la passerelle de communication, une donnée d'identification du second équipement identifié.

Préférentiellement, tout premier ou second équipement communiquant selon le protocole de communication Modbus est identifié au moyen d'une requête Modbus de lecture d'un mot de sortie.

Avantageusement, tout premier ou second équipement est identifié comme étant un équipement Modbus s'il répond à une requête de lecture Modbus avec un code d'exception différent de 0x0B.

Avantageusement, tout premier ou second équipement est identifié comme étant un équipement ne communiquant pas selon le protocole de communication Modbus quand une étape d'envoi d'une requête Modbus de lecture n'obtient pas de réponse dans un délai inférieur à une durée de temporisation de réponse prédéfinie.

Avantageusement, le procédé comporte une étape d'estimation d'une durée totale de détection et d'identification des premiers et seconds équipements, ladite durée totale étant inférieure ou égale au produit de la valeur de la durée de temporisation de réponse prédéfinie, du nombre maximal d'hôtes et du nombre de premiers équipements listés dans la deuxième liste.

De préférence, la durée de la temporisation de réponse est comprise entre 50 et 500 ms.

L'invention porte également sur un contrôleur de communication tel que décrit par la revendication 18.

De préférence, le contrôleur de communication comporte une interface homme/machine, connectée à l'unité de traitement, pour effectuer, au moins, une lecture de la première, de la deuxième et de la troisième liste d'adresses et une lecture et/ou une modification du premier, du deuxième et du troisième champ mémorisés dans la base de données.

## BREVE DESCRIPTION DES DESSINS

Les dessins annexés illustrent l'invention :

[Fig. 1] la figure 1 est une représentation schématique d'un exemple d'un réseau de communication comportant un contrôleur de communication,
[Fig. 2] la figure 2 représente un organigramme d'un procédé pour détecter et identifier les premiers et les seconds équipements,

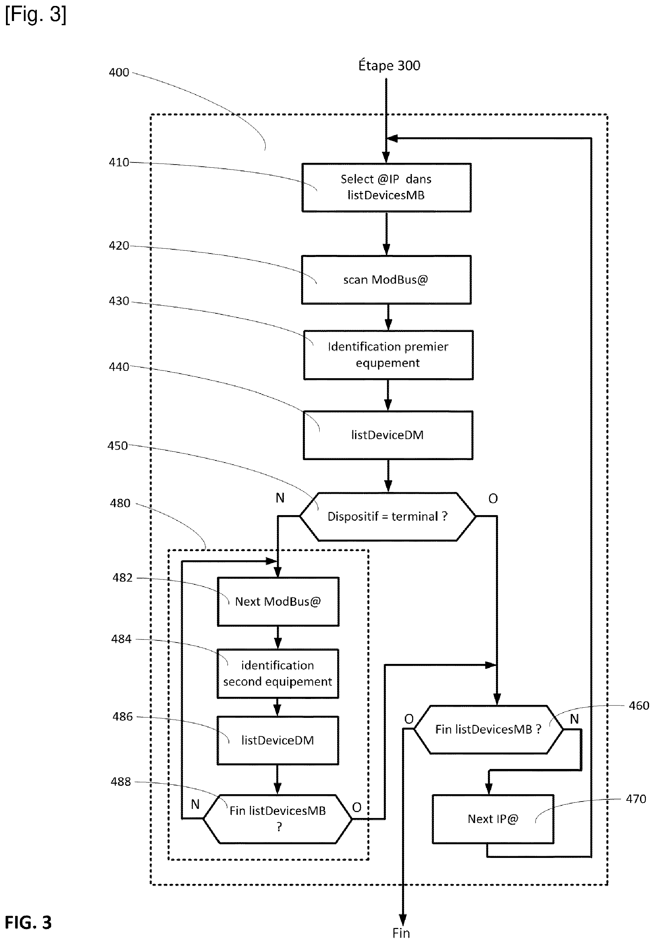

[Fig. 3] la figure 3 représente, sous forme détaillée, une étape du procédé faisant l'objet de l'invention,
[Fig. 4] les figures 4A à 4E représentent le contenu de plusieurs listes élaborées au cours du déroulement du procédé et contenant des adresses, des identifiants ou des propriétés des premiers et des seconds équipements,
[Fig. 5] la figure 5 représente le contenu d'une base de données utilisée pour identifier les équipements, et

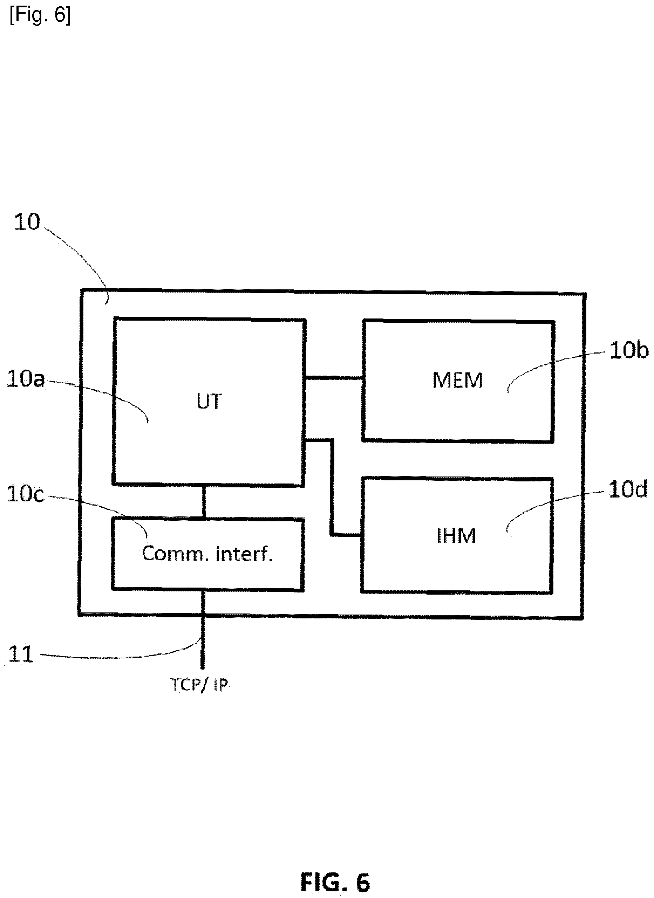

[Fig. 6] la figure 6 représente, sous forme d'un schéma bloc, un contrôleur de communication comportant des moyens pour la mise en oeuvre du procédé de détection et identification des premiers et des seconds équipements.

## DESCRIPTION DETAILLEE D'UN MODE DE REALISATION DE L'INVENTION

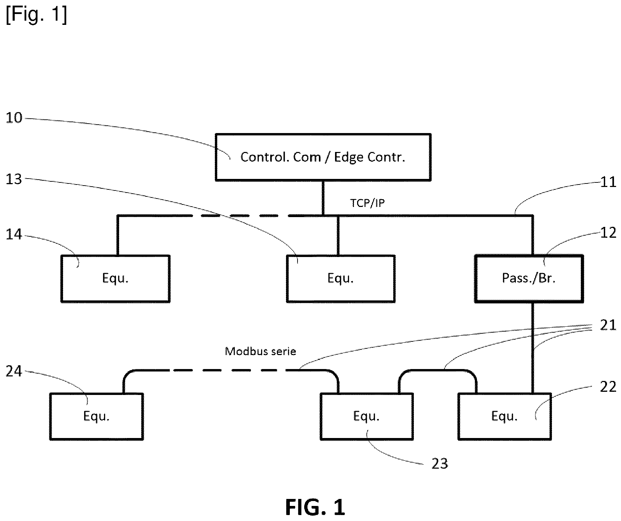

La figure 1 représente, sous forme schématique, un exemple de réseau de communication comportant un contrôleur de communication 10, appelé également en anglais « edge controler », connecté à plusieurs premiers équipements 12, 13, 14 au moyen d'un premier réseau de communication 11 de type Ethernet. Préférentiellement, les communications entre le contrôleur de communication 10 et les premiers équipements 12, 13, 14 suivent un protocole TCP/IP. Un ou plusieurs parmi les premiers équipements 12, 13, 14 peut être une passerelle de communication 12. Une telle passerelle de communication 12 est destinée à permettre une connexion d'un second réseau de communication 21, auquel sont connectés des seconds équipements 22, 23, 24. La passerelle de communication 12 permet une transmission de messages entre les seconds équipements 22, 23, 24, le contrôleur de communication 10 et les premiers équipements 12, 13, 14.

Le procédé faisant l'objet de l'invention est particulièrement adapté à la détection et à l'identification de tous les équipements communiquant selon un protocole Modbus. Le premier réseau de communication est préférentiellement de type Modbus TCP/IP, le second réseau de communication est préférentiellement de type Modbus série.

Le procédé faisant l'objet de l'invention peut être mis en oeuvre en présence de plusieurs passerelles de communication 12 connectées au premier réseau de communication 11 afin de connecter plusieurs seconds réseaux 21. Le procédé est exécuté de manière identique, qu'il y ait une ou plusieurs passerelles de communication et donc un ou plusieurs seconds réseaux de communication. Ledit procédé peut également être exécuté quand il n'existe pas de passerelle de communication 12 ou quand celle-ci est défaillante. La figure 1 ne représente qu'une seule passerelle et qu'un seul second réseau 21 afin de rendre la description plus claire.

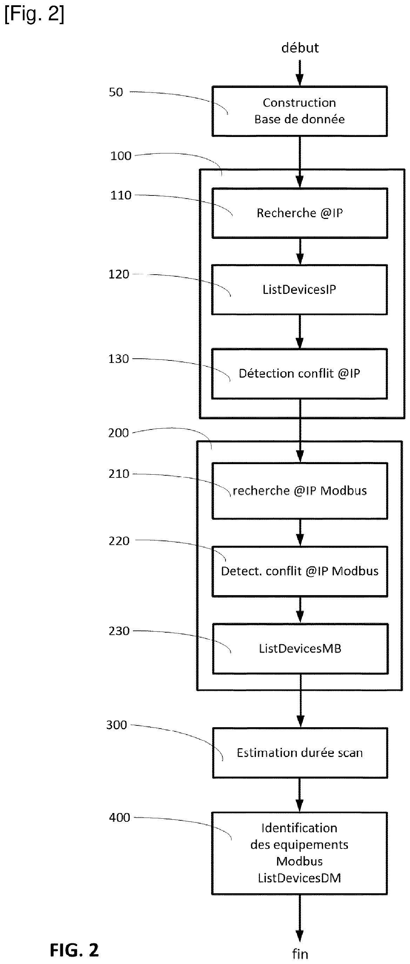

La figure 2 représente un organigramme du procédé pour détecter et identifier tous les premiers équipements et tous les seconds équipements. Une recherche de tous les premiers équipements 12, 13, 14 connectés au premier réseau 11 et communiquant selon un protocole Ethernet est effectuée au cours d'une étape de recherche 100. Pour cela, au cours d'une étape de recherche 110, le contrôleur de communication 10 effectue une recherche des adresses IP de tous les équipements connectés au premier réseau 11 en scrutant les ports ouverts des équipements connectés. Un port d'un équipement est utilisé par le protocole TCP (Transmission Control Protocol) pour la mise en place d'une connexion d'hôte à hôte, un hôte étant un équipement communiquant disposant d'une adresse IP. Un port est considéré comme étant « ouvert » quand une tentative de connexion au port dudit équipement obtient une réponse différente d'un message d'erreur tel que, par exemple, « échec de connexion ». Préférentiellement, une commande de type « NMAP (Network Mapper) » est émise par le contrôleur de communication 10 et permet de recueillir les adresses IP des équipements communiquant selon le protocole TCP/IP. Cette méthode de scrutation présente l'avantage d'exécuter la recherche en un temps très court, de l'ordre de 10 secondes.

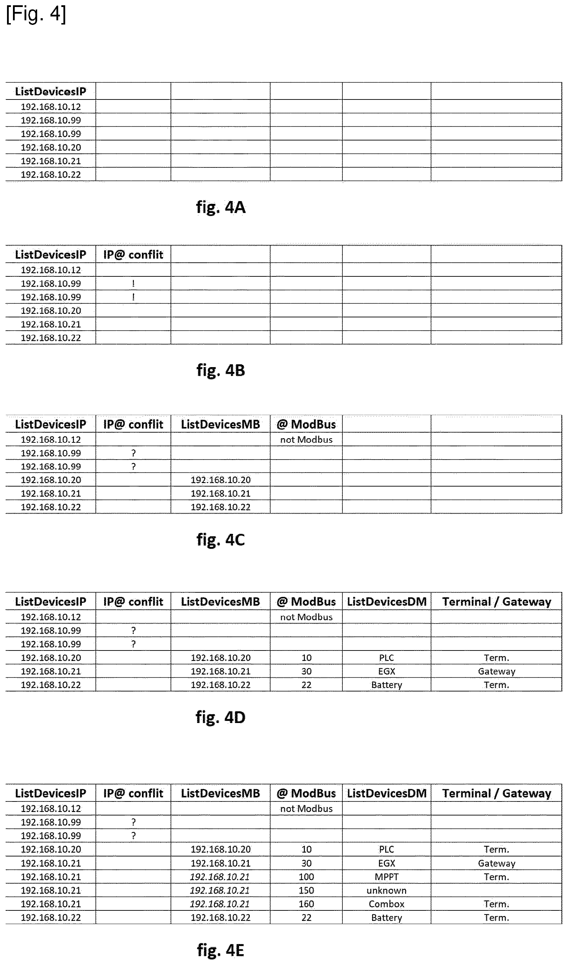

L'ensemble des adresses IP recueillies est enregistré dans une première liste ListDevicesIP au cours d'une étape 120 d'élaboration de la première liste constituée des adresses IP de tous les premiers équipements 12, 13, 14 détectés. Un exemple de la première liste est illustré en figure 4A. Dans ce cas, six adresses IP sont enregistrées dans une première liste :

192.168.10.12
192.168.10.99
192.168.10.99
192.168.10.20
192.168.10.21
192.168.10.22

Lors de la mise en oeuvre des premiers équipements 12, 13, 14, il est possible qu'une erreur ait été commise. Par exemple, une même adresse IP 192.168.10.99 est affectée à deux équipements différents. Une telle erreur peut affecter le fonctionnement du premier réseau de communication. D'autre part, une telle erreur est difficile à détecter manuellement. C'est pourquoi une étape 130 de détection des premiers équipements ayant une même adresse IP est effectuée. Au cours de cette étape, une recherche de doublon présent dans la première liste ListDevicesIP est effectuée et un indicateur d'erreur est affecté à chaque adresse IP figurant deux fois. La figure 4B illustre l'affectation de l'adresse IP 192.168.10.99 à deux équipements différents. Ces deux équipements ne seront plus interrogés pas la suite et un message d'erreur peut être émis pour signaler ce dysfonctionnement à l'utilisateur.

Le procédé se poursuit par une étape de recherche 200 du ou des premiers équipements 12, 13, 14 communiquant selon le protocole de communication Modbus TCP/IP. Ladite étape de recherche 200 comporte une étape 210 d'émission d'une requête d'identification Modbus successivement à chaque adresse IP contenue dans la première liste ListDevicesIP. Seuls les premiers équipements 12, 13, 14 communiquant selon le protocole de communication Modbus TCP/IP vont répondre. Une adresse IP de type X.Y.Z.H étant constituée d'un numéro de réseau X.Y.Z et d'un numéro d'hôte H, un premier moyen consiste à envoyer une commande d'identification Modbus pour chaque adresse IP contenue dans la première liste ListDevicesIP, à chaque numéro d'hôte, de 1 jusqu'à un nombre maximal prédéfini, HostMaxi, pour chaque parité, pour chaque vitesse de communication, pour un bit de stop égal à 1 et pour un bit de stop égal à 0. Le nombre HostMaxi correspond au nombre maximal d'équipements Modbus, appelés également « hôtes », pouvant être affectés à une adresse IP. La valeur du nombre Hostmaxi est préférentiellement choisie égale à 255 dans le cadre de Modbus mais ladite valeur peut également valoir 254 ou 253, certains numéros d'hôte pouvant être réservés à des besoins spécifiques Modbus. Ce premier moyen est exhaustif mais long. Préférentiellement, la requête d'identification Modbus est émise, pour chaque adresse IP contenue dans la première liste ListDevicesIP, au moyen d'une suite de commandes « NMAP » sur le port 502 TCP adressée à chaque numéro d'hôte, de 1 jusqu'au nombre maximal d'hôtes HostMaxi. Une telle suite de commandes se présente, par exemple et pour un réseau de classe C, sous une forme :

Nmap -p 502 192.168.10.1/24
Nmap -p 502 192.168.10.2/24
Nmap -p 502 192.168.10.255/24

La durée nécessaire à l'exécution d'une telle commande est sensiblement constante, de l'ordre de 10 secondes.

Ensuite, une étape de détection 220 des premiers équipements 12, 13, 14 ayant une même adresse IP Modbus est exécutée afin de déceler ce type d'erreur.

Le procédé se poursuit par une étape 230 d'élaboration d'une deuxième liste ListDevicesMB constituée des adresses IP du ou des premiers équipements 12, 13, 14 répondant sans erreur à la requête d'identification d'adresse IP Modbus. Un exemple de la deuxième liste est illustré en figure 4C : cette deuxième liste est constituée des adresses IP des premiers équipements communiquant selon le protocole de communication Modbus TCP/IP. Cette deuxième liste ListDevicesMB est un sous-ensemble de la première liste ListDevicesIP. Les éléments présents dans la première liste mais non présents dans la deuxième liste sont les premiers équipements ne communiquant pas selon le protocole Modbus TCP/IP, par exemple une imprimante, et les équipements dont l'adresse IP est affectée à plusieurs équipements.

Le procédé se poursuit par une étape d'estimation 300 d'une durée totale T de détection et d'identification des premiers et seconds équipements. La durée totale T correspond à une durée maximale en supposant que tous les premiers et seconds équipements sont des passerelles de communication. Ladite durée T est égale ou inférieure au produit du nombre NbrModbusDevices de premiers équipements 12, 13, 14 listés dans la deuxième liste ListDevicesMB, du nombre HostMaxi correspondant au nombre maximal d'équipements Modbus pouvant être affectés à une adresse IP et de la valeur d'une durée de temporisation de réponse Tr prédéfinie :

$$T \leq NbrModbusDevices \times HostMaxi \times Tr$$

Préférentiellement, la durée de la temporisation de réponse Tr est comprise entre 50 ms et 500 ms. Dans le cas d'une durée de la temporisation de réponse Tr égale à 200 ms et pour trois équipements Modbus connectés correctement au premier réseau de communication tel qu'illustré en figure 4C, la durée totale T de détection et d'identification sera inférieure ou égale à :

$$T \leq NbrModbusDevices \times HostMaxi \times Tr$$

$$Soit : T \leq 3 \times 255 \times 0{,}2$$

$$Soit : T \leq 153 \text{ secondes.}$$

L'étape d'estimation 300 de la durée totale T de détection et d'identification des premiers et seconds équipements est utile pour informer un utilisateur du temps nécessaire à l'exécution du procédé. Ladite étape d'estimation 300 étant purement informative, son exécution est facultative dans l'exécution du procédé de détection et d'identification des équipements.

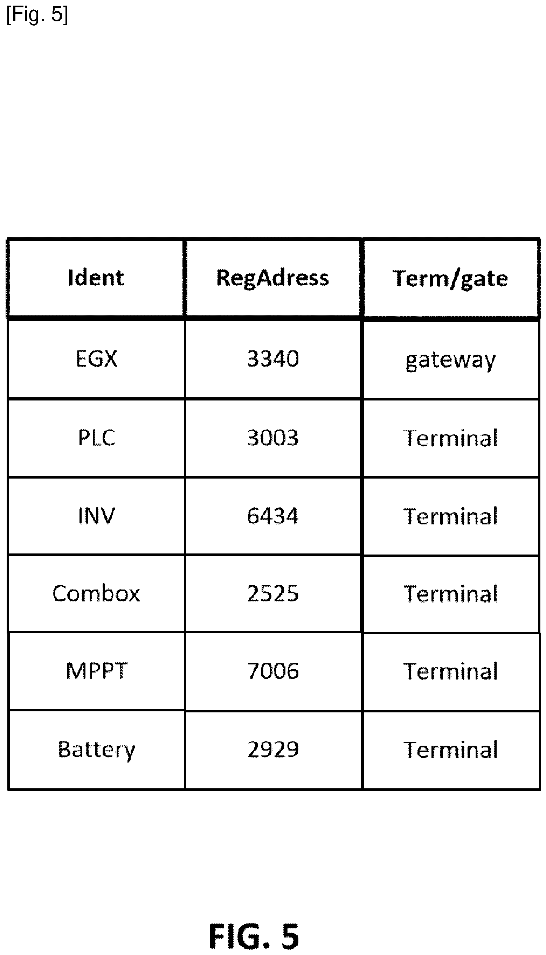

Une étape préliminaire 50 est exécutée avant l'exécution de l'étape de recherche 100 de tous les premiers équipements 12, 13, 14 afin de préparer une étape 400 d'identification de tous les premiers et seconds équipements communiquant selon le protocole de communication Modbus. Une base de données DataModel est constituée au cours de l'étape préliminaire 50. Ladite base de données DataModel, dont le contenu est représenté en figure 5, est constituée d'un premier champ Ident contenant une donnée d'identification d'au moins un équipement répertorié. Par exemple, et tel que représenté en figure 5, une première ligne du premier champ contient la donnée « EGX » correspondant à l'identité d'une passerelle de communication, en anglais « gateway ». Une deuxième ligne du premier champ contient la donnée « PLC » correspondant à un automate programmable et ainsi de suite. Tous les identifiants des équipements connus d'un ou plusieurs constructeurs peuvent ainsi être répertoriés et stockés dans la base de données DataModel. Au moins un deuxième champ RegAdress est affecté à chaque équipement répertorié. Le deuxième champ RegAdress contient une adresse Modbus d'un registre contenant au moins la donnée d'identification dudit équipement répertorié. Par exemple, et tel que représenté en figure 5, l'adresse Modbus 3340 contient une donnée d'identification, par exemple « EGX », d'une passerelle de communication « EGX ». Une adresse Modbus 3003 contient une donnée d'identification, par exemple « PLC », d'un automate programmable « PLC ». Ainsi l'interrogation des adresses Modbus listées dans le deuxième champ RegAdress de la base de données DataModel permet l'identification d'un équipement. Par exemple, et tel que représenté en figure 5, quand une interrogation Modbus à l'adresse 6434 d'un équipement obtient une réponse « INV », alors on peut en déduire que ledit équipement interrogé est un convertisseur de tension (« inverter » en anglais) puisque la réponse à l'interrogation est égale au contenu de la troisième ligne du premier champ Ident contenant la donnée « INV » et que l'adresse du registre interrogé correspond à la donnée « 6434 » à la troisième ligne du deuxième champ RegAdress.

Avantageusement, un troisième champ Term/gate est associé à chaque équipement répertorié dans la base de données DataModel afin de caractériser si l'équipement répertorié est une passerelle de communication 12 ou un équipement terminal 13, 14. Par exemple, et tel que représenté en figure 5, la première ligne du troisième champ Term/gate contient la donnée « gateway » parce que la première ligne du premier champ Ident correspond à un équipement répertorié sous la dénomination « EGX » qui est une passerelle de communication. A l'opposé, un automate programmable « PLC », répertorié en deuxième ligne dans la base de données DataModel, contient une donnée « Term » dans le troisième champ Term/gate puisqu'un automate programmable est un équipement terminal et non une passerelle de communication.

Quand tous les premiers équipements 12, 13, 14 communiquant selon un protocole de communication Modbus TCP/IP ont été listés dans la deuxième liste ListDevicesMB, le procédé se poursuit par une étape 400 d'identification de tous les premiers équipements communiquant selon le protocole de communication Modbus TCI/IP, et, quand un premier équipement est une passerelle de communication, le procédé comprend une étape d'identification de tous les seconds équipements connectés à ladite passerelle. Pour cela, le procédé sélectionne une adresse IP dans la deuxième liste ListDevicesMB au cours d'une étape de sélection 410. Ensuite, au cours d'une étape 420, une requête Modbus est effectuée pour lire le contenu successivement à chacune des adresses contenues dans le deuxième champ RegAdress de la base de données DataModel, à l'adresse IP sélectionnée. En prenant pour exemple la base de données représentée en figure 5, une requête Modbus de lecture sera émise aux adresses Modbus 3340 puis 3003 puis 6434 etc. Ensuite, une étape d'identification 430 est effectuée au cours de laquelle, quand une donnée lue à l'étape 420 d'envoi de requête Modbus de lecture correspond à une donnée d'identification Ident d'un modèle répertorié dans la base de données DataModel, l'équipement interrogé étant identifié, une étape 440 est effectuée pour élaborer une troisième liste ListDeviceDM des équipements communiquant selon le protocole de communication Modbus TCP/IP. La troisième liste ListDeviceDM est associée à l'adresse IP des premiers équipements 12, 13, 14 listés dans la deuxième liste ListDevicesMB. Un exemple de la troisième liste est illustré en figure 4D, constituée des données d'identification des premiers équipements identifiés. L'adresse Modbus des premiers équipements ayant été identifiés peut être inscrite dans une liste complémentaire @Modbus, associée aux deuxième et troisième listes, ainsi qu'illustré, à titre d'exemple, en figure 4D.

Les premiers équipements identifiés 12, 13, 14 peuvent être soit des équipements terminaux tels que des automates, convertisseurs, batteries, etc. ou des passerelles de communication. Une passerelle de communication 12 permet un échange de données entre un contrôleur de communication 10 et des seconds équipements 22, 23, 24 connectés sur un second réseau de communication, les seconds équipements disposant généralement de fonctions de communication d'un niveau moins évolué que les premiers équipements. Le procédé faisant l'objet de l'invention permet également d'identifier les seconds équipements connectés au second réseau 21. Pour cela, l'étape 400 d'identification des premiers équipements 12, 13, 14 comporte une boucle d'interrogation dans laquelle, pour chaque premier équipement identifié dans la troisième liste ListDeviceDM :

- quand ledit premier équipement identifié est une passerelle de communication 12, alors une étape 480 de recherche et d'identification de tous les seconds équipements 22, 23, 24 connectés au second réseau est effectuée, et
- quand ledit premier équipement identifié n'est pas une passerelle de communication 12 et donc un équipement terminal, alors l'étape d'identification des premiers équipements 12, 13, 14 se poursuit par une étape d'interrogation 470 du premier équipement identifié suivant dans la deuxième liste ListDevicesMB.

Plus précisément, lorsqu'un premier équipement est identifié, une recherche dans le troisième champ Term/gate de la base de données DataModel est effectuée au cours d'une étape 450. Quand l'équipement identifié est un équipement terminal, le procédé vérifie au cours d'une étape 460 si tous les premiers équipements figurant sur la deuxième liste ListDevicesMB ont été identifiés. Quand c'est le cas, le procédé est terminé, la deuxième liste ListDevicesMB et la troisième liste ListDeviceDM sont complètes et peuvent être exploitées par exemple, par un technicien en charge de l'intégration des équipements dans l'installation. Sinon, l'adresse IP suivante est sélectionnée dans la deuxième liste ListDevicesMB et le procédé retourne à l'étape 410 de sélection d'une adresse IP à identifier.

Quand l'équipement identifié est une passerelle de communication 12, il peut y avoir plusieurs adresses Modbus affectées à une adresse IP donnée, chaque second équipement connecté sur le second réseau de communication ayant une adresse Modbus propre. Dans ce cas, le procédé exécute une étape 480 de recherche et d'identification de tous les seconds équipements 22, 23, 24 comportant :

- pour chaque adresse Modbus de 1 jusqu'au nombre maximal d'hôtes HostMaxi, une étape d'envoi 482 d'une requête Modbus de lecture de la donnée contenue à chacune des adresses figurant dans le deuxième champ RegAdress de la base de données,
- une étape 484 d'identification d'un second équipement à un modèle répertorié quand la donnée lue à l'étape précédente correspond à la donnée d'identification Ident d'un modèle répertorié, et
- une étape de mise à jour 486 de la troisième liste ListDeviceDM en associant à l'adresse IP de la passerelle de communication 12, la donnée d'identification du second équipement 22, 23, 24 identifié.

Pour plus de clarté, au cours de l'étape d'identification 484, le procédé interroge successivement chaque adresse contenue dans le deuxième champ RegAdress tant qu'un équipement ne répond pas avec un identifiant correspondant à l'identifiant Ident associé à l'adresse Modbus interrogée. De cette façon, l'ensemble des premiers équipements et des seconds équipements est identifié. La figure 4E, illustre, à titre d'exemple, la troisième liste ListDeviceDM élaborée en fin d'étape 480 de recherche et d'identification de tous les seconds équipements.

Quand plusieurs passerelles de communication 12 sont connectées au premier réseau de communication, l'étape 480 de recherche et d'identification de tous les seconds équipements 22, 23, 24 est exécutée successivement pour chacune des passerelles de communication 12. Quand il n'existe pas de passerelle de communication 12, l'étape 480 de recherche et d'identification de tous les seconds équipements 22, 23, 24 n'est pas exécutée puisqu'il n'existe que des premiers équipements terminaux.

Une requête d'identification Modbus telle qu'effectuée à l'étape 420 consiste préférentiellement à envoyer une demande de lecture d'un mot de sortie contenu dans un registre, dénommée aussi « requête de lecture seule », selon le code fonction Modbus 03, à une adresse spécifiée dans la commande, la commande étant émise à destination de l'équipement non identifié. Toute autre commande de lecture, par exemple lecture de n bits, est également utilisable. Quand l'équipement communique selon un protocole de communication Modbus, ledit équipement répond en émettant le contenu du registre adressé par la commande. Il peut arriver que l'équipement réponde par un code d'exception 0x01 ou 0x02 ou 0x03 ou 0x04 ou encore 0x08. Dans ces cas, l'équipement signale qu'il a bien reçu la commande mais qu'il est incapable de traiter la demande. Cette information est utile malgré tout : l'équipement interrogé est un équipement communiquant selon le protocole Modbus mais son identité n'est pas connue. La troisième liste ListDeviceDM peut néanmoins être mise à jour, par exemple et ainsi que représenté en figure 4E, en affectant une identité inconnue (ou « unknown » en anglais) à un équipement ayant une adresse IP 192.168.10.21 et une adresse Modbus 150. De façon plus générale, tout premier ou second équipement est identifié comme étant un équipement Modbus s'il répond à une requête de lecture Modbus avec un code d'exception différent de 0x0B. Une réponse avec un code 0x0B signifie qu'il n'existe pas d'équipement à l'adresse interrogée. De même façon, tout premier ou second équipement est identifié comme étant un équipement ne communiquant pas selon le protocole de communication Modbus quand une étape d'envoi d'une requête Modbus de lecture n'obtient pas de réponse dans un délai inférieur à la durée de la temporisation de réponse prédéfinie Tr.

L'invention a également pour objet un contrôleur de communication 10 comportant :

- une unité de traitement 10a agencée pour mettre en oeuvre le procédé,
- au moins un circuit de mémorisation 10b, connecté à l'unité de traitement 10a et agencé pour mémoriser au moins la première, la deuxième et la troisième liste d'adresses ListDeviceIP, ListDeviceMB, ListDeviceDM, et les contenus d'un premier, un deuxième et un troisième champ Ident, RegAdress, Term/gate organisés dans une base de données DataModel, et
- au moins une interface de communication 10c, connectée d'une part à l'unité de traitement 10a et d'autre part à un premier réseau de communication 11 de type Ethernet auquel sont connectés des premiers équipements 12, 13, 14, ladite interface de communication 10c étant agencée pour exécuter des demandes d'émission de requêtes Modbus sur le premier réseau de communication 11 et pour recevoir des réponses émises par les premiers équipements 12, 13, 14 et transmettre les réponses à l'unité de traitement 10a.

Le contrôleur de communication 10 comporte préférentiellement un microordinateur.

Dans un mode de réalisation préféré, le contrôleur de communication 10 comporte une interface homme/machine 10d, connectée à l'unité de traitement. Ainsi, un opérateur peut effectuer, au moins, une lecture de la première, de la deuxième et de la troisième liste d'adresses ListDeviceIP, ListDeviceMB, ListDeviceDM et une lecture et/ou une modification du premier, du deuxième et du troisième champ Ident, RegAdress, Term/gate mémorisés dans la base de données DataModel. La connaissance de ces informations permet, en phase d'installation ou de validation, une vérification rapide, exhaustive et automatique, de la conformité de la configuration des équipements et des réseaux de communication par rapport au réseau de communication prévu. La base de données DataModel peut être mise à jour pour intégrer de nouveaux équipements.

Le procédé faisant l'objet de l'invention permet d'effectuer automatiquement la recherche et l'identification de tous les équipements communiquant selon le protocole Modbus, connectés sur le premier réseau Ethernet et sur un ou plusieurs seconds réseaux Modbus série. De plus, des équipements connectés ne répondant pas au protocole Modbus sont également détectés. L'efficacité du procédé permet de réduire significativement la durée nécessaire à la phase de recherche et d'identification et une détection des anomalies au niveaux des équipements, comme par exemple des adresses identiques d'équipements connectés soit au premier réseau, soit au second réseau ce qui procure un gain de productivité appréciable au technicien en charge de l'intégration des équipements dans l'installation, tout particulièrement dans les installations comportant un grand nombre d'équipements connectés.

**Revendications**

1. Procédé mis en oeuvre dans un contrôleur de communication (10) connecté, au moyen d'un premier réseau de communication (11) de type Ethernet, à un ou plusieurs premiers équipements (12, 13, 14) communiquant selon un protocole IP, ledit procédé étant destiné :

- à détecter et à identifier le ou les premiers équipements (12, 13, 14) communiquant selon un protocole de communication Modbus TCP/IP, et
- à détecter et identifier des seconds équipements (22, 23, 24) connectés entre eux au moyen d'au moins un second réseau de communication (21) de type Modbus série, ledit second réseau de communication (21) étant connecté au premier réseau de communication (11) au moyen d'une passerelle de communication (12),

ledit procédé étant **caractérisé en ce qu'**il comporte les étapes suivantes :

- la recherche (100) de tous les premiers équipements (12, 13, 14) connectés au premier réseau de communication (11) et communiquant selon un protocole IP,
- la recherche (200) du ou des premiers équipements (12, 13, 14) communiquant selon un protocole de communication Modbus TCP/IP,
- l'identification (450) d'au moins une passerelle de communication (12) parmi le ou les premiers équipements (12, 13, 14) communiquant selon un protocole de communication Modbus TCP/IP, et
- la recherche et l'identification (480) du ou des seconds équipements (22, 23, 24) communiquant selon un protocole de communication Modbus quand au moins une passerelle de communication (12), parmi le ou les premiers équipements (12, 13, 14) communiquant selon un protocole de communication Modbus TCP/IP, est identifiée.

2. Procédé selon la revendication 1 **caractérisé en ce que** l'étape de recherche (100) de tous les premiers équipements (12, 13, 14) comporte une étape de recherche (110) des adresses IP des premiers équipements ayant des ports ouverts.

3. Procédé selon la revendication précédente **caractérisé en ce que** l'étape de recherche (100) de tous les premiers équipements (12, 13, 14) comporte une étape (120) d'élaboration d'une première liste (ListDevicesIP) constituée des adresses IP de tous les premiers équipements (12, 13, 14) ayant des ports ouverts.

4. Procédé selon la revendication précédente **caractérisé en ce que** l'étape de recherche (100) de tous les premiers équipements (12, 13, 14) comporte une étape (130) de détection des premiers équipements ayant une même adresse IP.

5. Procédé selon la revendication précédente **caractérisé en ce que** l'étape de recherche (200) du ou des premiers équipements (12, 13, 14) communiquant selon le protocole de communication Modbus TCP/IP comporte une étape (210) d'émission d'une requête d'identification Modbus sur le port 502 TCP adressée à chaque premier équipement (12, 13, 14) au moyen d'un numéro d'hôte, de 1 à un nombre maximal d'hôtes (HostMaxi) prédéfini, pour chaque adresse IP contenue dans la première liste (ListDevicesIP).

6. Procédé selon la revendication précédente **caractérisé en ce que** l'étape de recherche (200) du ou des premiers équipements (12, 13, 14) communiquant selon le protocole de communication Modbus TCP/IP listés dans la première liste (ListDevicesIP) comporte une étape (220) de détection des premiers équipements (12, 13, 14) répondant à la requête d'identification Modbus et ayant une même adresse IP.

7. Procédé selon l'une des revendications 5 ou 6 **caractérisé en ce que** l'étape de recherche (200) du ou des premiers équipements (12, 13, 14) communiquant selon le protocole de communication Modbus TCP/IP comporte une étape (230) d'élaboration d'une deuxième liste (ListDevicesMB) constituée des adresses IP du ou des premiers équipements (12, 13, 14) répondant à la requête d'identification d'adresse Modbus.

8. Procédé selon la revendication précédente **caractérisé en ce qu'**une base de données (DataModel) est constituée dans une étape préliminaire (50), ladite base (DataModel) étant constituée d'un premier champ (Ident) contenant une donnée d'identification d'au moins un équipement répertorié, et, pour chaque équipement répertorié, au moins un deuxième champ (RegAdress) contenant au moins une adresse Modbus d'un registre contenant la donnée d'identification dudit équipement répertorié.

9. Procédé selon la revendication précédente **caractérisé en ce qu'**un troisième champ (Term/gate) est associé à chaque équipement répertorié dans la base de données (DataModel), ledit troisième champ (Term/gate) contenant un état caractérisant si l'équipement répertorié est une passerelle de communication (12) ou un équipement terminal (13, 14).

10. Procédé selon la revendication précédente **caractérisé en ce qu'**il comporte une étape d'identification (400) des premiers et des seconds équipements communiquant selon le protocole de communication Modbus TCP/IP comportant, pour chaque premier équipement (12,13,14) listé dans la deuxième liste (ListDevicesMB) :

    - une étape (420) d'envoi d'une requête Modbus de lecture du contenu successivement à chacune des adresses contenues dans le deuxième champ (RegAdress) de la base de données (DataModel),
    - une étape d'identification (430) du premier équipement à un modèle répertorié quand une donnée lue à l'étape (420) d'envoi de requête Modbus de lecture, correspond à la donnée d'identification (Ident) d'un modèle répertorié, et
    - une étape (440) d'élaboration d'une troisième liste (ListDeviceDM) constituée des données d'identification des équipements communiquant selon le protocole de communication Modbus TCP/IP, ladite troisième liste (ListDeviceDM) étant associée à l'adresse IP dudit premier équipement (12, 13, 14).

11. Procédé selon la revendication précédente **caractérisé en ce que** l'étape d'identification (400) des premiers et des seconds équipements communiquant selon le protocole de communication Modbus TCP/IP comporte une boucle d'interrogation dans laquelle, pour chaque premier équipement identifié dans la troisième liste (ListDeviceDM) :

    - quand ledit premier équipement identifié est une passerelle de communication (12), alors une étape (480) de recherche et d'identification de tous les seconds équipements (22, 23, 24) connectés au second réseau est effectuée, et
    - quand ledit premier équipement identifié n'est pas une passerelle de communication (12), alors l'étape d'identification des premiers équipements (12, 13, 14) se poursuit par une étape d'interrogation (470) du premier équipement identifié suivant dans la deuxième liste (ListDevicesMB).

12. Procédé selon la revendication précédente **caractérisé en ce que** l'étape (480) de recherche et d'identification de tous les seconds équipements (22, 23, 24) connectés au moyen d'une passerelle de communication (12) au second réseau de communication (21), comporte :

    - pour chaque adresse Modbus de 1 jusqu'au nombre maximal d'hôtes (HostMaxi), une étape d'envoi (482) d'une requête Modbus de lecture du contenu successivement à chacune des adresses contenues dans le deuxième champ (RegAdress) de la base de données,
    - une étape d'identification (484) d'un second équipement à un modèle répertorié quand la donnée lue à une des adresses contenue dans le deuxième champ (RegAdress) correspond à la donnée d'identification (Ident) d'un modèle répertorié, et
    - une étape de mise à jour (486) de la troisième liste (ListDeviceDM) d'équipements élaborée en associant à l'adresse IP de la passerelle de communication (12), une donnée d'identification du second équipement (22, 23, 24) identifié.

13. Procédé selon la revendication précédente **caractérisé en ce que** tout premier ou second équipement (12, 13, 14, 22, 23, 24) communiquant selon le protocole de communication Modbus est identifié au moyen d'une requête Modbus de lecture d'un mot de sortie.

14. Procédé selon la revendication précédente **caractérisé en ce que** tout premier ou second équipement (12, 13, 14, 22, 23, 24) est identifié comme étant un équipement Modbus s'il répond à une requête de lecture Modbus avec un code d'exception différent de 0x0B.

15. Procédé selon la revendication précédente **caractérisé en ce que** tout premier ou second équipement (12, 13, 14, 22, 23, 24) est identifié comme étant un équipement ne communiquant pas selon le protocole de communication Modbus quand une étape d'envoi d'une requête Modbus de lecture n'obtient pas de réponse dans un délai inférieur à une durée de temporisation de réponse (Tr) prédéfinie.

16. Procédé selon la revendication précédente **caractérisé en ce qu'**il comporte une étape d'estimation (300) d'une durée totale (T) de détection et d'identification des premiers et seconds équipements (12, 13, 14, 22, 23, 24), ladite durée (T) étant inférieure ou égale au produit de la valeur de la durée de temporisation de réponse (Tr) prédéfinie, du nombre maximal d'hôtes (HostMaxi) et du nombre de premiers équipements (NbrModbusDevices) listés dans la deuxième liste (ListDevicesMB).

**17.** Procédé selon la revendication précédente **caractérisé en ce que** la durée de la temporisation de réponse (Tr) est comprise entre 50 et 500 ms.

**18.** Contrôleur de communication (10) **caractérisé en ce qu'**il comporte :

- une unité de traitement (10a) agencée pour mettre en oeuvre le procédé selon l'une quelconque des revendications précédentes,
- au moins un circuit de mémorisation (10b), connecté à l'unité de traitement (10a) et agencé pour mémoriser au moins une première, une deuxième et une troisième liste d'adresses (ListDeviceIP, ListDeviceMB, ListDeviceDM), et un premier, un deuxième et un troisième champ (Ident, RegAdress, Term/gate) organisés dans une base de données (DataModel), et
- au moins une interface de communication (10c), connectée d'une part à l'unité de traitement (10a) et d'autre part à un premier réseau de communication (11) de type Ethernet auquel sont connectés des premiers équipements (12, 13, 14), ladite interface de communication (10c) étant agencée pour exécuter des demandes d'émission de requêtes Modbus sur le premier réseau de communication (11) et pour recevoir des réponses émises par les premiers équipements (12, 13, 14) et transmettre les réponses à l'unité de traitement (10a).

**19.** Contrôleur de communication (10) selon la revendication précédente **caractérisé en ce qu'**il comporte une interface homme/machine (10d), connectée à l'unité de traitement, pour effectuer, au moins, une lecture de la première, de la deuxième et de la troisième liste d'adresses (ListDeviceIP, ListDeviceMB, ListDeviceDM) et une lecture et/ou une modification du premier, du deuxième et du troisième champ (Ident, RegAdress, Term/gate) mémorisés dans la base de données (DataModel).

**Patentansprüche**

**1.** Verfahren, das in einem Kommunikationscontroller (10) durchgeführt wird, der mittels eines ersten Kommunikationsnetzwerks (11) vom Typ Ethernet mit einer oder mehreren ersten gemäß einem IP-Protokoll kommunizierenden Ausrüstungen (12, 13, 14) verbunden ist, wobei das Verfahren dazu bestimmt ist:

- die erste gemäß einem Modbus-TCP/IP-Kommunikationsprotokoll kommunizierende Ausrüstung oder Ausrüstungen (12, 13, 14) zu erfassen und zu identifizieren, und
- zweite Ausrüstungen (22, 23, 24) zu erfassen und zu identifizieren, die mittels mindestens eines zweiten Kommunikationsnetzwerks (21) des Typs serieller Modbus miteinander verbunden sind, wobei das zweite Kommunikationsnetzwerk (21) mittels eines Kommunikations-Gateways (12) mit dem ersten Kommunikationsnetzwerk (11) verbunden ist,

wobei das Verfahren **dadurch gekennzeichnet ist, dass** es die folgenden Schritte aufweist:

- die Suche (100) aller ersten Ausrüstungen (12, 13, 14), die mit dem ersten Kommunikationsnetzwerk (11) verbunden sind und gemäß einem IP-Protokoll kommunizieren,
- die Suche (200) der ersten gemäß einem Modbus-TCP/IP-Kommunikationsprotokoll kommunizierenden Ausrüstung oder Ausrüstungen (12, 13, 14),
- die Identifizierung (450) mindestens eines Kommunikations-Gateways (12) unter der oder den ersten gemäß einem Modbus-TCP/IP-Kommunikationsprotokoll kommunizierenden Ausrüstung(en) (12, 13, 14), und
- die Suche und die Identifizierung (480) der zweiten gemäß einem Modbus-Kommunikationsprotokoll kommunizierenden Ausrüstung oder Ausrüstungen (22, 23, 24), wenn mindestens ein Kommunikations-Gateway (12) unter der ersten gemäß einem Modbus-TCP/IP-Kommunikationsprotokoll kommunizierenden Ausrüstung oder Ausrüstungen (12, 13, 14) identifiziert wird.

**2.** Verfahren nach Anspruch 1, **dadurch gekennzeichnet, dass** der Suchschritt (100) aller ersten Ausrüstungen (12, 13, 14) einen Suchschritt (110) der IP-Adressen der ersten Ausrüstungen aufweist, die offene Ports haben.

**3.** Verfahren nach dem vorhergehenden Anspruch, **dadurch gekennzeichnet, dass** der Suchschritt (100) aller ersten Ausrüstungen (12, 13, 14) einen Schritt (120) der Erarbeitung einer ersten Liste (ListDevicesIP) aufweist, die aus den IP-Adressen aller ersten Ausrüstungen (12, 13, 14) besteht, die offene Ports haben.

**4.** Verfahren nach dem vorhergehenden Anspruch, **dadurch gekennzeichnet, dass** der Suchschritt (100) aller ersten Ausrüstungen (12, 13, 14) einen Schritt (130) der Erfassung der ersten Ausrüstungen aufweist, die die gleiche IP-Adresse haben.

5. Verfahren nach dem vorhergehenden Anspruch, **dadurch gekennzeichnet, dass** der Suchschritt (200) der ersten gemäß dem Modbus-TCP/IP-Kommunikationsprotokoll kommunizierenden Ausrüstung oder Ausrüstungen (12, 13, 14) einen Schritt (210) des Sendens einer Modbus-Identifizierungsanfrage auf dem Port 502 TCP, die an jede erste Ausrüstung (12, 13, 14) adressiert ist, mittels einer Host-Nummer von 1 bis zu einer vordefinierten maximalen Anzahl von Hosts (HostMaxi) für jede in der ersten Liste (ListDevicesIP) enthaltene IP-Adresse aufweist.

6. Verfahren nach dem vorhergehenden Anspruch, **dadurch gekennzeichnet, dass** der Suchschritt (200) der ersten gemäß dem Modbus-TCP/IP-Kommunikationsprotokoll kommunizierenden Ausrüstung oder Ausrüstungen (12, 13, 14), die in der ersten (ListDevicesIP) registriert sind, einen Schritt (220) der Erfassung der ersten Ausrüstungen (12, 13, 14) aufweist, die auf die Modbus-Identifizierungsanfrage antworten und die gleiche IP-Adresse haben.

7. Verfahren nach einem der Ansprüche 5 oder 6, **dadurch gekennzeichnet, dass** der Suchschritt (200) der ersten gemäß dem Modbus-TCP/IP-Kommunikationsprotokoll kommunizierenden Ausrüstung oder Ausrüstungen (12, 13, 14) einen Schritt (230) der Erarbeitung einer zweiten Liste (ListDevicesMB) aufweist, die aus den IP-Adressen der ersten Ausrüstung oder Ausrüstungen (12, 13, 14) besteht, die auf die Modbus-Adressenidentifizierungsanfrage antworten.

8. Verfahren nach dem vorhergehenden Anspruch, **dadurch gekennzeichnet, dass** in einem vorhergehenden Schritt (50) eine Datenbank (DataModel) erstellt wird, wobei die Bank (DataModel) aus einem ersten Feld (Ident), das einen Identifizierungsdatenwert mindestens einer registrierten Ausrüstung enthält, und für jede registrierte Ausrüstung aus mindestens einem zweiten Feld (RegAdress) besteht, das mindestens eine Modbus-Adresse eines Registers enthält, das den Identifizierungsdatenwert der registrierten Ausrüstung enthält.

9. Verfahren nach dem vorhergehenden Anspruch, **dadurch gekennzeichnet, dass** ein drittes Feld (Term/gate) jeder in der Datenbank (DataModel) registrierten Ausrüstung zugeordnet ist, wobei das dritte Feld (Term/gate) einen Zustand enthält, der bestimmt, ob die registrierte Ausrüstung ein Kommunikations-Gateway (12) oder eine Endausrüstung (13, 14) ist.

10. Verfahren nach dem vorhergehenden Anspruch, **dadurch gekennzeichnet, dass** es einen Schritt der Identifizierung (400) der ersten und der zweiten gemäß dem Modbus-TCP/IP-Kommunikationsprotokoll kommunizierenden Ausrüstungen aufweist, der für jede in der zweiten Liste (ListDevicesMB) aufgelistete erste Ausrüstung (12, 13, 14) aufweist:

    - einen Schritt (420) des Sendens einer Modbus-Leseanfrage des Inhalts nacheinander an jede der im zweiten Feld (RegAdress) der Datenbank (DataModel) enthaltenen Adressen,
    - einen Schritt der Identifizierung (430) der ersten Ausrüstung an einem registrierten Modell, wenn ein im Schritt (420) des Sendens einer Modbus-Leseanfrage gelesener Datenwert dem Identifizierungsdatenwert (Ident) eines registrierten Modells entspricht, und
    - einen Schritt (440) der Erarbeitung einer dritten Liste (ListDeviceDM), die aus den Identifizierungsdaten der gemäß dem Modbus-TCP/IP-Kommunikationsprotokoll kommunizierenden Ausrüstungen besteht, wobei die dritte Liste (ListDeviceDM) der IP-Adresse der ersten Ausrüstung (12, 13, 14) zugeordnet ist.

11. Verfahren nach dem vorhergehenden Anspruch, **dadurch gekennzeichnet, dass** der Identifizierungsschritt (400) der ersten und der zweiten gemäß dem Modbus-TCP/IP-Kommunikationsprotokoll kommunizierenden Ausrüstungen eine Abfrageschleife aufweist, in der für jede in der dritten Liste (ListDeviceDM) identifizierte erste Ausrüstung:

    - wenn die erste identifizierte Ausrüstung ein Kommunikations-Gateway (12) ist, ein Schritt (480) der Suche und der Identifizierung aller zweiten Ausrüstungen (22, 23, 24) ausgeführt wird, die mit dem zweiten Netzwerk verbunden sind, und
    - wenn die erste identifizierte Ausrüstung kein Kommunikations-Gateway (12) ist, der Schritt der Identifizierung der ersten Ausrüstungen (12, 13, 14) durch einen Abfrageschritt (470) der ersten identifizierten Ausrüstung fortgesetzt wird, die in der zweiten Liste (ListDevicesMB) folgt.

12. Verfahren nach dem vorhergehenden Anspruch, **dadurch gekennzeichnet, dass** der Schritt (480) der Suche und der Identifizierung aller zweiten Ausrüstungen (22, 23, 24), die mittels eines Kommunikations-Gateways (12) mit dem zweiten Kommunikationsnetzwerk (21) verbunden sind, aufweist:

- für jede Modbus-Adresse von 1 bis zur maximalen Anzahl von Hosts (HostMaxi), einen Schritt des Sendens (482) einer Modbus-Leseanfrage des Inhalts nacheinander an jede der im zweiten Feld (RegAdress) der Datenbank enthaltenen Adressen,
- einen Schritt der Identifizierung (484) einer zweiten Ausrüstung an einem registrierten Modell, wenn der an einer der im zweiten Feld (RegAdress) enthaltenen Adressen gelesene Datenwert dem Identifizierungs-Datenwert (Ident) eines registrierten Modells entspricht, und
- einen Schritt der Aktualisierung (486) der dritten Liste (ListDeviceDM) von Ausrüstungen, die erarbeitet wird, indem der IP-Adresse des Kommunikations-Gateways (12) ein Identifizierungsdatenwert der identifizierten zweiten Ausrüstung (22, 23, 24) zugeordnet wird.

13. Verfahren nach dem vorhergehenden Anspruch, **dadurch gekennzeichnet, dass** jede erste oder zweite gemäß dem Modbus-Kommunikationsprotokoll kommunizierende Ausrüstung (12, 13, 14, 22, 23, 24) mittels einer Modbus-Leseanfrage eines Ausgangsworts identifiziert wird.

14. Verfahren nach dem vorhergehenden Anspruch, **dadurch gekennzeichnet, dass** jede erste oder zweite Ausrüstung (12, 13, 14, 22, 23, 24) als eine Modbus-Ausrüstung identifiziert wird, wenn sie einer Modbus-Leseanfrage mit einem Ausnahmecode anders als 0x0B entspricht.

15. Verfahren nach dem vorhergehenden Anspruch, **dadurch gekennzeichnet, dass** jede erste oder zweite Ausrüstung (12, 13, 14, 22, 23, 24) als eine nicht gemäß dem Modbus-Kommunikationsprotokoll kommunizierende Ausrüstung identifiziert wird, wenn ein Schritt des Sendens einer Modbus-Leseanfrage in einer kürzeren Zeit als eine vordefinierte Antwortverzögerungsdauer (Tr) keine Antwort erhält.

16. Verfahren nach dem vorhergehenden Anspruch, **dadurch gekennzeichnet, dass** es einen Schritt der Schätzung (300) einer Gesamtdauer (T) der Erfassung und der Identifizierung der ersten und zweiten Ausrüstungen (12, 13, 14, 22, 23, 24) aufweist, wobei die Dauer (T) geringer als das oder gleich dem Produkt aus dem Wert der vordefinierten Antwortverzögerungsdauer (Tr), der maximalen Anzahl von Hosts (HostMaxi) und der Anzahl erster Ausrüstungen (NbrModbusDevices) ist, die in der zweiten Liste (ListDevicesMB) aufgelistet sind.

17. Verfahren nach dem vorhergehenden Anspruch, **dadurch gekennzeichnet, dass** die Dauer der Antwortverzögerung (Tr) zwischen 50 und 500 ms liegt.

18. Kommunikationscontroller (10), **dadurch gekennzeichnet, dass** er aufweist:

- eine Verarbeitungseinheit (10a), die eingerichtet ist, das Verfahren nach einem der vorhergehenden Ansprüche durchzuführen,
- mindestens einen Speicherschaltkreis (10b), der mit der Verarbeitungseinheit (10a) verbunden und eingerichtet ist, mindestens eine erste, eine zweite und eine dritte Adressenliste (ListDeviceIP, ListDeviceMB, ListDeviceDM) und ein erstes, ein zweites und ein drittes Feld (Ident, RegAdress, Term/gate) zu speichern, die in einer Datenbank (DataModel) angeordnet sind, und
- mindestens eine Kommunikationsschnittstelle (10c), die einerseits mit der Verarbeitungseinheit (10a) und andererseits mit einem ersten Kommunikationsnetzwerk (11) vom Typ Ethernet verbunden ist, mit dem erste Ausrüstungen (12, 13, 14) verbunden sind, wobei die Kommunikationsschnittstelle (10c) eingerichtet ist, Sendeanforderungen von Modbus-Anfragen auf dem ersten Kommunikationsnetzwerk (11) auszuführen und von den ersten Ausrüstungen (12, 13, 14) gesendete Antworten zu empfangen und die Antworten an die Verarbeitungseinheit (10a) zu übertragen.

19. Kommunikationscontroller (10) nach dem vorhergehenden Anspruch, **dadurch gekennzeichnet, dass** er eine mit der Verarbeitungseinheit verbundene Mensch-Maschine-Schnittstelle (10d) aufweist, um mindestens einen Lesevorgang der ersten, der zweiten und der dritten Adressenliste (ListDeviceIP, ListDeviceMB, ListDeviceDM) und einen Lesevorgang und/oder eine Änderung des ersten, des zweiten und des dritten Felds (Ident, RegAdress, Term/gate) auszuführen, die in der Datenbank (DataModel) gespeichert sind.

**Claims**

1.  Method implemented in a communication controller (10) connected, by means of a first communication network (11) of Ethernet type, to one or more first items of equipment (12, 13, 14) communicating according to an IP protocol, said method being intended:

    - to detect and to identify the first item or items of equipment (12, 13, 14) communicating according to a Modbus TCP/IP communication protocol, and
    - to detect and identify second items of equipment (22, 23, 24) connected to one another by means of at least one second communication network (21) of serial Modbus type, said second communication network (21) being connected to the first communication network (11) by means of a communication gateway (12),

    said method being **characterized in that** it comprises the following steps:

    - searching (100) for all of the first items of equipment (12, 13, 14) connected to the first communication network (11) and communicating according to an IP protocol,
    - searching (200) for the first item or items of equipment (12, 13, 14) communicating according to a Modbus TCP/IP communication protocol,
    - identifying (450) at least one communication gateway (12) from among the first item or items of equipment (12, 13, 14) communicating according to a Modbus TCP/IP communication protocol, and
    - searching for and identifying (480) the second item or items of equipment (22, 23, 24) communicating according to a Modbus communication protocol when at least one communication gateway (12), from among the first item or items of equipment (12, 13, 14) communicating according to a Modbus TCP/IP communication protocol, is identified.

2.  Method according to Claim 1, **characterized in that** the step (100) of searching for all of the first items of equipment (12, 13, 14) comprises a step (110) of searching for the IP addresses of the first items of equipment having open ports.

3.  Method according to the preceding claim, **characterized in that** the step (100) of searching for all of the first items of equipment (12, 13, 14) comprises a step (120) of formulating a first list (ListDevicesIP) consisting of the IP addresses of all of the first items of equipment (12, 13, 14) having open ports.

4.  Method according to the preceding claim, **characterized in that** the step (100) of searching for all of the first items of equipment (12, 13, 14) comprises a step (130) of detecting first items of equipment having one and the same IP address.

5.  Method according to the preceding claim, **characterized in that** the step (200) of searching for the first item or items of equipment (12, 13, 14) communicating according to the Modbus TCP/IP communication protocol comprises a step (210) of sending a Modbus identification request on TCP port 502 addressed to each first item of equipment (12, 13, 14) by way of a host number, from 1 to a predefined maximum host number (HostMaxi), for each IP address contained in the first list (ListDevicesIP).

6.  Method according to the preceding claim, **characterized in that** the step (200) of searching for the first item or items of equipment (12, 13, 14) communicating according to the Modbus TCP/IP communication protocol listed in the first list (ListDevicesIP) comprises a step (220) of detecting first items of equipment (12, 13, 14) responding to the Modbus identification request and having one and the same IP address.

7.  Method according to either of Claims 5 and 6, **characterized in that** the step (200) of searching for the first item or items of equipment (12, 13, 14) communicating according to the Modbus TCP/IP communication protocol comprises a step (230) of formulating a second list (ListDevicesMB) consisting of the IP addresses of the first item or items of equipment (12, 13, 14) responding to the Modbus address identification request.

8.  Method according to the preceding claim, **characterized in that** a database (DataModel) is formed in a preliminary step (50), said database (DataModel) consisting of a first field (Ident) containing an item of identification data of at least one listed item of equipment and, for each listed item of equipment, at least one second field (RegAdress) containing at least one Modbus address of a register containing the item of identification data of said listed item of equipment.

9.  Method according to the preceding claim, **characterized in that** a third field (Term/gate) is associated with each item of equipment listed in the database (DataModel), said third field (Term/gate) containing a state characterizing whether the listed item of equipment is a communication gateway (12) or a terminal item of equipment (13, 14).

10. Method according to the preceding claim, **characterized in that** it comprises a step (400) of identifying the first and second items of equipment communicating according to the Modbus TCP/IP communication protocol comprising, for each first item of equipment (12, 13, 14) listed in the second list (ListDevicesMB):

    - a step (420) of sending a Modbus content read request successively to each of the addresses contained in the second field (RegAdress) of the database (DataModel),
    - a step (430) of identifying the first item of equipment as a listed model when an item of data read in the step (420) of sending the Modbus read request corresponds to the item of identification data (Ident) of a listed model, and
    - a step (440) of formulating a third list (ListDeviceDM) consisting of the identification data of the items of equipment communicating according to the Modbus TCP/IP communication protocol, said third list (ListDeviceDM) being associated with the IP address of said first item of equipment (12, 13, 14).

11. Method according to the preceding claim, **characterized in that** the step (400) of identifying the first and second items of equipment communicating according to the Modbus TCP/IP communication protocol comprises an interrogation loop in which, for each first item of equipment identified in the third list (ListDeviceDM):

    - when said identified first item of equipment is a communication gateway (12), then a step (480) of searching for and identifying all of the second items of equipment (22, 23, 24) connected to the second network is performed, and
    - when said identified first item of equipment is not a communication gateway (12), then the step of identifying the first items of equipment (12, 13, 14) continues with a step (470) of interrogating the following identified first item of equipment in the second list (ListDevicesMB).

12. Method according to the preceding claim, **characterized in that** the step (480) of searching for and identifying all of the second items of equipment (22, 23, 24) connected to the second communication network (21) by means of a communication gateway (12) comprises:

    - for each Modbus address from 1 to the maximum host number (HostMaxi), a step (482) of sending a Modbus content read request successively to each of the addresses contained in the second field (RegAdress) of the database,
    - a step (484) of identifying a second item of equipment as a listed model when the item of data read at one of the addresses contained in the second field (RegAdress) corresponds to the item of identification data (Ident) of a listed model, and
    - a step (486) of updating the formulated third list (ListDeviceDM) of items of equipment by associating an item of identification data of the identified second item of equipment (22, 23, 24) with the IP address of the communication gateway (12).

13. Method according to the preceding claim, **characterized in that** any first or second item of equipment (12, 13, 14, 22, 23, 24) communicating according to the Modbus communication protocol is identified by means of a Modbus request to read an output word.

14. Method according to the preceding claim, **characterized in that** any first or second item of equipment (12, 13, 14, 22, 23, 24) is identified as being a Modbus item of equipment if it responds to a Modbus read request with an exception code other than 0x0B.

15. Method according to the preceding claim, **characterized in that** any first or second item of equipment (12, 13, 14, 22, 23, 24) is identified as being an item of equipment not communicating according to the Modbus communication protocol when a step of sending a Modbus read request does not obtain a response within a period shorter than a predefined response timeout duration (Tr).

16. Method according to the preceding claim, **characterized in that** it comprises a step (300) of estimating a total duration (T) to detect and identify the first and second items of equipment (12, 13, 14, 22, 23, 24), said duration (T) being less than or equal to the product of the value of the predefined response timeout duration (Tr), the maximum host number (HostMaxi) and the number of first items of equipment (NbrModbusDevices) listed in the second list (ListDevicesMB).

17. Method according to the preceding claim, **characterized in that** the duration of the response timeout (Tr) is between 50 and 500 ms.

18. Communication controller (10), **characterized in that** it comprises:

- a processing unit (10a) designed to implement the method according to any one of the preceding claims,
- at least one storage circuit (10b), connected to the processing unit (10a) and designed to store at least a first, a second and a third address list (ListDeviceIP, ListDeviceMB, ListDeviceDM) and a first, a second and a third field (Ident, RegAdress, Term/gate) that are organized into a database (DataModel), and
- at least one communication interface (10c), connected firstly to the processing unit (10a) and secondly to a first communication network (11) of Ethernet type to which first items of equipment (12, 13, 14) are connected, said communication interface (10c) being designed to execute demands to send Modbus requests on the first communication network (11) and to receive responses sent by the first items of equipment (12, 13, 14) and transmit the responses to the processing unit (10a).

19. Communication controller (10) according to the preceding claim, **characterized in that** it comprises a human-machine interface (10d), connected to the processing unit, in order at least to read the first, the second and the third address list (ListDeviceIP, ListDeviceMB, ListDeviceDM) and to read and/or modify the first, the second and the third field (Ident, RegAdress, Term/gate) that are stored in the database (DataModel).

[Fig. 1]

**FIG. 1**

[Fig. 2]

FIG. 2

[Fig. 3]

Étape 300

400

410 — Select @IP dans listDevicesMB

420 — scan ModBus@

430 — Identification premier equpement

440 — listDeviceDM

450 — N  Dispositif = terminal ?  O

480

482 — Next ModBus@

484 — identification second equipement

486 — listDeviceDM

488 — N  Fin listDevicesMB ?  O

460 — O  Fin listDevicesMB ?  N

470 — Next IP@

Fin

**FIG. 3**

[Fig. 4]

| ListDevicesIP | | | | |
|---|---|---|---|---|
| 192.168.10.12 | | | | |
| 192.168.10.99 | | | | |
| 192.168.10.99 | | | | |
| 192.168.10.20 | | | | |
| 192.168.10.21 | | | | |
| 192.168.10.22 | | | | |

**fig. 4A**

| ListDevicesIP | IP@ conflit | | | |
|---|---|---|---|---|
| 192.168.10.12 | | | | |
| 192.168.10.99 | ! | | | |
| 192.168.10.99 | ! | | | |
| 192.168.10.20 | | | | |
| 192.168.10.21 | | | | |
| 192.168.10.22 | | | | |

**fig. 4B**

| ListDevicesIP | IP@ conflit | ListDevicesMB | @ ModBus | |
|---|---|---|---|---|
| 192.168.10.12 | | | not Modbus | |
| 192.168.10.99 | ? | | | |
| 192.168.10.99 | ? | | | |
| 192.168.10.20 | | 192.168.10.20 | | |
| 192.168.10.21 | | 192.168.10.21 | | |
| 192.168.10.22 | | 192.168.10.22 | | |

**fig. 4C**

| ListDevicesIP | IP@ conflit | ListDevicesMB | @ ModBus | ListDevicesDM | Terminal / Gateway |
|---|---|---|---|---|---|
| 192.168.10.12 | | | not Modbus | | |
| 192.168.10.99 | ? | | | | |
| 192.168.10.99 | ? | | | | |
| 192.168.10.20 | | 192.168.10.20 | 10 | PLC | Term. |
| 192.168.10.21 | | 192.168.10.21 | 30 | EGX | Gateway |
| 192.168.10.22 | | 192.168.10.22 | 22 | Battery | Term. |

**fig. 4D**

| ListDevicesIP | IP@ conflit | ListDevicesMB | @ ModBus | ListDevicesDM | Terminal / Gateway |
|---|---|---|---|---|---|
| 192.168.10.12 | | | not Modbus | | |
| 192.168.10.99 | ? | | | | |
| 192.168.10.99 | ? | | | | |
| 192.168.10.20 | | 192.168.10.20 | 10 | PLC | Term. |
| 192.168.10.21 | | 192.168.10.21 | 30 | EGX | Gateway |
| 192.168.10.21 | | 192.168.10.21 | 100 | MPPT | Term. |
| 192.168.10.21 | | 192.168.10.21 | 150 | unknown | |
| 192.168.10.21 | | 192.168.10.21 | 160 | Combox | Term. |
| 192.168.10.22 | | 192.168.10.22 | 22 | Battery | Term. |

**fig. 4E**

[Fig. 5]

| Ident | RegAdress | Term/gate |
|---|---|---|
| EGX | 3340 | gateway |
| PLC | 3003 | Terminal |
| INV | 6434 | Terminal |
| Combox | 2525 | Terminal |
| MPPT | 7006 | Terminal |
| Battery | 2929 | Terminal |

# FIG. 5

[Fig. 6]

**FIG. 6**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2930394 A1
- WO 0176194 A1, BARRETT MARK ALAN
- US 20090287803 A1
- WO 2013062604 A1